(19) Europäisches Patentamt
European Patent Office
Office européen des brevets

(11) EP 4 339 853 A1

(12) DEMANDE DE BREVET EUROPEEN

(43) Date de publication:
20.03.2024 Bulletin 2024/12

(21) Numéro de dépôt: 23197999.8

(22) Date de dépôt: 18.09.2023

(51) Classification Internationale des Brevets (IPC):
G06Q 10/047 (2023.01)    G05D 1/00 (2024.01)
G08G 5/00 (2006.01)

(52) Classification Coopérative des Brevets (CPC):
G06Q 10/047; G05D 1/0088; G08G 5/0021;
G08G 5/0034; G08G 5/0091; G08G 5/0013;
G08G 5/0026

(84) Etats contractants désignés:
AL AT BE BG CH CY CZ DE DK EE ES FI FR GB
GR HR HU IE IS IT LI LT LU LV MC ME MK MT NL
NO PL PT RO RS SE SI SK SM TR
Etats d'extension désignés:
BA
Etats de validation désignés:
KH MA MD TN

(30) Priorité: 19.09.2022 FR 2209440

(71) Demandeur: THALES
92190 Meudon (FR)

(72) Inventeurs:
• GAYRAUD, Lionel
91767 PALAISEAU (FR)
• THIRIET, Aurélien
33700 MERIGNAC (FR)
• DIAZ-PINEDA, Jaime
33700 MERIGNAC (FR)
• GUERRINI, Gilles
33700 MERIGNAC (FR)

(74) Mandataire: Lavoix
2, place d'Estienne d'Orves
75441 Paris Cedex 09 (FR)

(54) **PROCÉDÉ ET DISPOSITIF DE GÉNÉRATION D'AU MOINS UN PLAN DE TRAJECTOIRES D'UN ENGIN MOBILE POUR RÉALISER UNE MISSION**

(57) L'invention concerne un procédé et un dispositif de génération d'au moins un plan de trajectoires d'un engin mobile pour réaliser une mission comportant une pluralité de tâches à effectuer. Le dispositif met en oeuvre un module d'obtention (22) d'au moins un critère de haut niveau à satisfaire, un module (24) de génération, pour chaque tâche, d'un ensemble de trajectoire(s) opérationnelle(s), et calcul d'un premier coût, relatif au critère de haut niveau, associé ; un module (26) de calcul d'au moins une transition entre deux trajectoires opérationnelles successives et calcul d'un deuxième coût, relatif au critère de haut niveau, associé à la transition, et un module (28) de détermination d'au moins un plan de trajectoires, comportant une trajectoire opérationnelle sélectionnée dans chaque ensemble de trajectoires opérationnelles généré, et une transition entre deux trajectoires opérationnelles successives, la détermination d'un plan de trajectoires étant effectuée en fonction desdits premiers et deuxièmes coûts.

FIG.1

**Description**

La présente invention concerne un procédé et un dispositif de génération d'au moins un plan de trajectoires d'un engin mobile pour réaliser une mission.

L'invention se situe dans le domaine du pilotage d'engins mobiles pour réaliser des missions prédéfinies, et trouve des applications à la fois dans la planification préalable de trajectoires de mission et la mise à jour en temps réel de trajectoires de mission, en cours de mission.

L'invention s'applique pour tous types d'engins mobiles, par exemple aériens, terrestres, marins ou sous-marins, qui sont utilisés pour réaliser des missions civiles ou militaires.

Une mission à effectuer est constituée d'un ensemble de tâches à effectuer, dans un ordre donné, la réalisation des diverses tâches nécessitant un déplacement de l'engin mobile, par exemple le survol d'une pluralité de zones de terrain pour un aéronef.

La réalisation d'une mission comportant plusieurs tâches à effectuer met en oeuvre diverses contraintes temporelles, géographiques, topologiques, météorologiques ainsi que des contraintes et paramètres spécifiques au matériel à utiliser, par exemple divers capteurs tels que des radars, des caméras pour réaliser des prises de vue etc.

Pour un opérateur, de multiples possibilités se présentent, et la prise en considération simultanée de toutes les contraintes, en particulier pour une modification de plan de trajectoires en temps réel, est difficilement réalisable et induit un stress et une charge cognitive importants.

Un des objectifs des systèmes de planification de mission est d'alléger la charge mentale de l'opérateur tout en proposant des plans de trajectoires valides, intégrant l'ensemble des contraintes. Cependant il est critique que la décision finale revienne à l'opérateur, par exemple au pilote dans le domaine de l'aéronautique.

Les équipements à mettre en oeuvre pour réaliser une mission étant complexes, une des problématiques qui se pose dans ce domaine est l'interaction homme-machine, et la capacité pour l'opérateur d'évaluer la pertinence d'une ou plusieurs solutions, par exemple un ou plusieurs plans de trajectoires pour effectuer une mission donnée, qui sont « optimisés » sur des critères de bas niveau calculés algorithmiquement. Inversement, il est utile, notamment dans un contexte de mission en temps réel, de permettre à l'opérateur de fournir des critères de haut niveau, qui définissent des performances à atteindre, plutôt que de donner des consignes précises, pour chaque équipement concerné, dans des plages de valeurs de paramètres à régler.

Une solution pour traduire, dans une communication bidirectionnelle homme-machine, les intentions « haut niveau » de l'opérateur en valeurs de paramètres « bas niveau », et réciproquement, à traduire les valeurs de performances bas niveau en valeurs de performances « haut niveau » a été proposée dans la demande de brevet FR2005823 intitulée « Communication bidirectionnelle homme-machine ».

Dans le cadre de la planification de mission, comme indiqué ci-dessus, en particulier dans le cas d'un système de mission embarqué sur un engin mobile, comportant une pluralité d'équipements (e.g. capteur, effecteurs), et encore plus particulièrement lorsque l'engin mobile peut emprunter un très grand nombre de trajectoires, il existe un besoin d'optimiser la planification de mission tout en allégeant la charge cognitive de l'opérateur.

A cet effet, l'invention propose, selon un aspect, un procédé de génération d'au moins un plan de trajectoires d'un engin mobile pour réaliser une mission, la mission comportant une pluralité de tâches à effectuer dans un ordre donné, le ou chaque plan de trajectoires étant composé d'une succession de trajectoires opérationnelles séparées par des transitions, chaque trajectoire opérationnelle étant associée à une tâche à effectuer et ayant un point d'entrée et un point de sortie, chaque transition étant une trajectoire entre un point de sortie d'une trajectoire opérationnelle et un point d'entrée d'une trajectoire opérationnelle suivante.

Le procédé comporte des étapes, mise en oeuvre par un processeur de calcul, de :

A) obtention d'au moins un critère de haut niveau à satisfaire par ladite mission, ,
B) génération, pour chaque tâche à effectuer d'un ensemble d'au moins une trajectoire opérationnelle, et calcul, pour chaque trajectoire opérationnelle dudit ensemble, d'un premier coût relatif au critère de haut niveau à satisfaire associé,
C) calcul d'au moins une transition entre deux trajectoires opérationnelles successives et calcul d'un deuxième coût, relatif au critère de haut niveau à satisfaire, associé à ladite au moins une transition,
D) détermination d'au moins un plan de trajectoires, le ou chaque plan de trajectoires comportant une trajectoire opérationnelle sélectionnée dans chaque ensemble de trajectoires opérationnelles généré, et une transition entre deux trajectoires opérationnelles successives,

la détermination d'un plan de trajectoires étant effectuée en fonction d'un coût global fonction desdits premiers et deuxièmes coûts des trajectoires opérationnelles et transitions dudit plan de trajectoires.

Avantageusement, le procédé de l'invention met en oeuvre la détermination de trajectoires opérationnelles et de transitions, et le calcul de coûts associés, pour calculer ensuite un plan de trajectoires dont le coût global est en adéquation avec ledit au moins un critère de haut niveau fourni.

Le procédé de génération d'au moins un plan de trajectoires d'un engin mobile pour réaliser une mission peut également présenter une ou plusieurs des caractéristiques ci-dessous, prises indépendamment ou selon toutes les combinaisons techniquement envisageables.

Le procédé comporte en outre une définition, à partir dudit au moins un critère de haut niveau à satisfaire, de $K$ scores dans un espace métrique à $K$ dimensions, $K$ étant un nombre entier supérieur ou égal à 1, dit espace métrique de haut niveau, les $K$ scores formant un vecteur de performance à satisfaire, le calcul du premier coût comportant, pour chaque trajectoire opérationnelle, un calcul d'un premier vecteur de performance dans ledit espace métrique de haut niveau, ledit premier coût étant calculé par une fonction d'évaluation d'écart, combinant ledit premier vecteur de performance et le vecteur de performance à satisfaire, et le calcul du deuxième coût comporte, pour chaque transition, un calcul d'un deuxième vecteur de performance dans ledit espace métrique de haut niveau, ledit deuxième coût étant calculé par la fonction d'évaluation d'écart, combinant ledit deuxième vecteur de performance et le vecteur de performance à satisfaire.

La fonction d'évaluation d'écart effectue une combinaison des écarts, composante par composante, entre ledit premier ou deuxième vecteur de performance et le vecteur de performance à satisfaire.

Le calcul d'un premier vecteur de performance associé à une trajectoire opérationnelle comporte un calcul de valeurs de performance associées à ladite trajectoire opérationnelle dans un espace métrique de bas niveau, et une application d'un premier outil de mise en correspondance entre l'espace métrique de bas niveau et l'espace métrique de haut niveau, le premier outil de mise en correspondance ayant été préalablement entraîné sur des données d'apprentissage.

Le calcul d'un deuxième vecteur de performance associé à la transition comporte un calcul de valeurs de performance associées à ladite transition dans l'espace métrique de bas niveau, et une application d'un deuxième outil de mise en correspondance entre espace métrique de bas niveau et espace métrique de haut niveau, le deuxième outil de mise en correspondance ayant été préalablement entraîné sur des données d'apprentissage.

Le premier outil de mise en correspondance met en oeuvre un réseau de neurones ou un arbre de décision à logique floue, et le deuxième outil de mise en correspondance met en oeuvre un réseau de neurones ou un arbre de décision à logique floue.

L'étape C) comporte un calcul d'une pluralité de transitions entre deux trajectoires opérationnelles successives, et le calcul d'un coût synthétique, en fonction des deuxièmes coûts associés à chacune des transitions de la pluralité de transitions, ledit coût synthétique étant attribué à chacune des transitions de ladite pluralité de transitions.

L'étape D) comporte la détermination d'une pluralité de $N$ plans de trajectoires, $N$ étant strictement supérieur à 1, le procédé comportant en outre une étape de post-traitement (40) mettant en oeuvre un filtrage de trajectoires, chaque plan de trajectoires étant transformé en une trajectoire de mission, le filtrage étant mis en oeuvre sur les trajectoires de mission pour obtenir un nombre $M$ inférieur à $N$ de trajectoires, telles qu'une distance entre toute paire de trajectoires de mission est supérieure à un seuil, ladite distance étant calculée selon une métrique de proximité prédéfinie.

Selon un autre aspect, l'invention concerne un dispositif de génération d'au moins un plan de trajectoires d'un engin mobile pour réaliser une mission, la mission comportant une pluralité de tâches à effectuer dans un ordre donné, le ou chaque plan de trajectoires étant composé d'une succession de trajectoires opérationnelles séparées par des transitions, chaque trajectoire opérationnelle étant associée à une tâche à effectuer et ayant un point d'entrée et un point de sortie, chaque transition étant une trajectoire entre un point de sortie d'une trajectoire opérationnelle et un point d'entrée d'une trajectoire opérationnelle suivante. Le dispositif comporte un processeur de calcul configuré pour exécuter :

- un module obtention d'au moins un critère de haut niveau à satisfaire par ladite mission,
- un module de génération, pour chaque tâche à effectuer, d'un ensemble d'au moins une trajectoire opérationnelle, et de calcul, pour chaque trajectoire opérationnelle dudit ensemble, d'un premier coût associé,
- un module de calcul d'au moins une transition entre deux trajectoires opérationnelles successives et de calcul d'un deuxième coût associé à ladite au moins une transition,
- un module de détermination d'au moins un plan de trajectoires, le ou chaque plan de trajectoires comportant une trajectoire opérationnelle sélectionnée dans chaque ensemble de trajectoires opérationnelles généré, et une transition entre deux trajectoires opérationnelles successives,

la détermination d'un plan de trajectoires étant effectuée en fonction d'un coût global fonction desdits premiers et deuxièmes coûts des trajectoires opérationnelles et transitions dudit plan de trajectoires.

Le dispositif est avantageusement configuré pour mettre en oeuvre le procédé de génération d'au moins un plan de trajectoires d'un engin mobile pour réaliser une mission tel que brièvement décrit ci-dessus, selon tous ses modes de réalisation.

Selon un autre aspect, l'invention concerne un programme d'ordinateur comportant des instructions logicielles qui, lorsqu'elles sont mises en oeuvre par un dispositif électronique programmable, mettent en oeuvre un procédé de génération d'au moins un plan de trajectoires d'un engin mobile pour réaliser une mission tel que brièvement décrit ci-dessus.

D'autres caractéristiques et avantages de l'invention ressortiront de la description qui en est donnée ci-dessous, à titre indicatif et nullement limitatif, en référence aux figures annexées, parmi lesquelles :

[Fig 1] la figure 1 illustre schématiquement un système de planification de mission comportant un dispositif de génération de trajectoires selon un mode de réalisation ;
[Fig 2] la figure 2 est synoptique des principales étapes d'un procédé de génération d'un plan de trajectoires selon un mode de réalisation ;
[Fig 3] la figure 3 est un exemple schématique de graphe utilisé pour déterminer un plan de trajectoires ;
[Fig 4] la figure 4 est un exemple schématique de plans de trajectoires générés pour effectuer une mission comportant deux tâches à effectuer ;
[Fig 5] la figure 5 est synoptique des principales étapes d'un filtrage par proximité entre trajectoires selon un mode de réalisation.

L'invention sera décrite ci-après dans le cas d'application dans lequel l'engin mobile considéré est un aéronef, équipé de divers capteurs, notamment de capteurs d'imagerie, adaptés pour effectuer des tâches de prise de vue de sites survolés.

Il est entendu que l'invention n'est pas limitée à un type particulier d'engin mobile, et trouve des applications pour tout type d'engins mobiles aériens, marins, sous-marins, terrestres.

De plus, il est également clair que la capture d'images est un simple exemple de tâche à effectuer lors d'une mission, et que l'invention s'applique de manière analogue à d'autres types de tâches pour réaliser divers types de missions, civiles ou militaires.

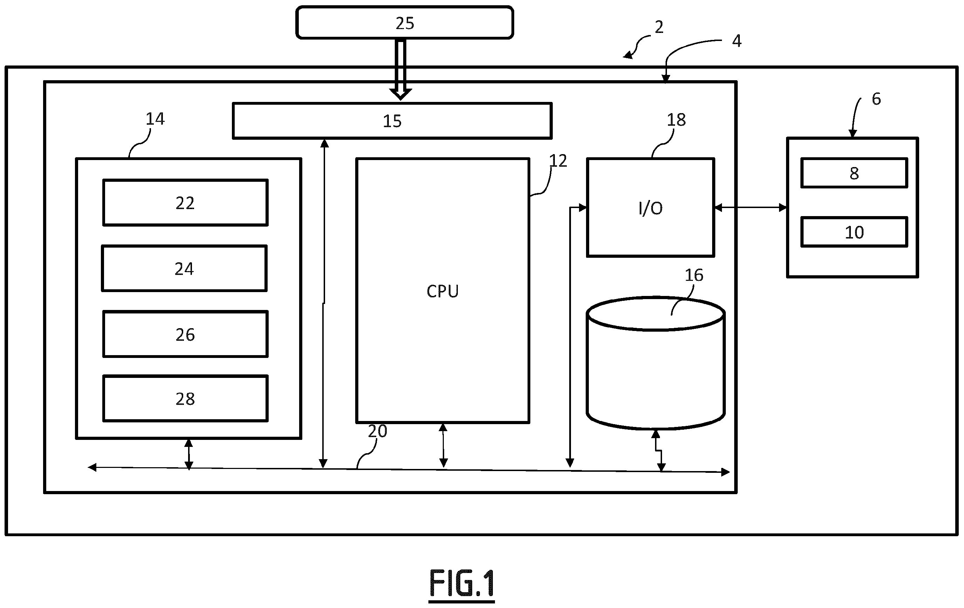

La figure 1 illustre schématiquement un système de mission 2, comportant un dispositif 4 de génération de plans de trajectoires d'un engin mobile pour réaliser une mission.

L'engin mobile concerné n'est pas représenté.

Le système de mission 2 comporte en outre une interface homme-machine (IHM) 6, qui permet une interaction avec un opérateur.

L'IHM 6 comporte notamment un écran de visualisation 8 et un interacteur 10 permettant de transmettre des commandes au dispositif 4.

Dans un mode de réalisation, l'écran de visualisation est un écran tactile qui permet de recevoir des commandes de l'opérateur par toucher. Dans ce cas, l'écran de visualisation 8 et l'interacteur 10 sont regroupés en un seul dispositif.

L'IHM 6 a été représentée séparée du dispositif 4 de génération de plans de trajectoires. En variante, l'IHM 8 peut être intégrée au dispositif 4 de génération de plans de trajectoires, par exemple dans un terminal de mission.

Dans un mode de réalisation, le système de mission 2 est un système de planification de mission, intégré par exemple dans une base au sol.

Dans un autre mode de réalisation, le système de mission 2 est embarqué dans l'engin mobile (non représenté), par exemple dans le système de calcul de bord de l'engin mobile.

Dans une variante, le dispositif 4 de génération de plans de trajectoires est situé dans une base au sol et l'IHM 6 est embarquée. Dans cette variante, le dispositif 4 et l'IHM 6 comportent ou sont connectés à une ou plusieurs interfaces de communication, par exemple des interfaces de communication radio, permettant une communication radio entre ces dispositifs.

Le dispositif 4 est par exemple un système informatique composé d'un ou plusieurs dispositifs électroniques programmables, i.e. des ordinateurs.

Pour simplifier l'explication, on considère que le dispositif 4 de génération de plans de trajectoires est un ordinateur comportant un processeur 12, une unité de mémoire électronique 14, une interface de communication 15, une unité de mémoire électronique 16 et une interface d'entrées/sorties (I/O) 18. Les éléments du dispositif 4 sont adaptés à communiquer via un bus de communication 20. Le dispositif 4 est un dispositif électronique programmable configuré pour mettre en oeuvre un procédé de génération d'au moins un plan de trajectoires d'un engin mobile selon l'invention.

L'unité de mémoire 14 est configurée pour mémoriser des modules 22, 24, 26, 28 configurés pour mettre en oeuvre un procédé de génération de plans de trajectoires tel que décrit en détail ci-après.

Le module 22 est un module d'acquisition configuré pour réaliser une acquisition d'au moins un critère de haut niveau à satisfaire par ladite mission, dans un référentiel sémantique prédéfini.

Dans un mode de réalisation, les critères de haut niveau sont dits de haut niveau d'abstraction, facilement compréhensibles et interprétables par l'opérateur humain. Par exemple, l'opérateur définit ses intentions dans un champ lexical (e.g. une ontologie), par exemple « détecter très rapidement », « trouver solution sécurisée et rapide », et ces intentions sont traduites automatiquement en valeurs à satisfaire sur plusieurs dimensions, par exemple par des valeurs de performance ou scores à atteindre en termes de rapidité, efficacité, sécurité.

Par exemple, si l'opérateur indique son intention d'obtenir, pour effectuer la mission, un plan de trajectoires moyennement rapide et très sécurisé, le système applique un score de rapidité de 6/10 et un score de sécurité de 9/10, ces scores étant représentatifs des critères de haut niveau à valider par les plans de trajectoires générés.

Bien entendu, ces critères et ces scores sont donnés ici à titre d'exemple, de nombreuses variantes, dépendant des besoins opérationnels et des contextes d'utilisation.

Dans un mode de réalisation, les critères de haut niveau, représentatifs de l'intention de l'opérateur, sont transformés en scores formant des composantes d'un vecteur de performances à satisfaire, dans un espace métrique à K dimensions, également appelé espace métrique de haut niveau ou HLOM (de l'anglais « High Level Operational Metrics »). Par exemple, K=3 lorsque les dimensions sont représentatives de la rapidité, de l'efficacité et de la sécurité.

Selon une variante, l'opérateur indique les critères à atteindre en fournissant directement les score dans les K dimensions de l'espace métrique HLOM, par exemple via une interface graphique dédiée (e.g. un curseur à déplacer), affichée sur l'écran 8.

De plus le module 22 est configuré pour obtenir des informations permettant de définir la mission, et des informations 25 relatives à des conditions effectives de mission (e.g. données topologiques, données météorologiques, données issues de capteurs).

Les informations 25 peuvent provenir de multiples sources distinctes, e.g. de serveurs distants, de capteurs, de bases de données.

En variante, une partie des informations 25 et fournie par l'opérateur.

Selon une autre variante, les informations 25 sont mémorisées préalablement dans l'unité de mémoire 16 du dispositif 4.

Une mission comportant un ensemble de tâches à effectuer est définie, chaque tâche ayant des caractéristiques associées (e.g. lieu, durée, qualité).

Le module 24 est un module de génération, pour chaque tâche à effectuer d'un ensemble, ou « cluster », d'au moins une trajectoire opérationnelle, et de calcul d'un premier coût associé, représentatif d'un écart par rapport aux scores à atteindre.

Une trajectoire est définie par une suite de points à parcourir, chaque point étant défini dans un référentiel spatial donné, et peut être réduite à un seul point.

Selon un mode de réalisation, des indications d'orientation (ou pose) de l'engin mobile en chaque point de la trajectoire sont également fournies pour définir la trajectoire.

Une trajectoire opérationnelle associée à une tâche est une trajectoire de l'engin mobile permettant de réaliser la tâche. En d'autres termes, si l'engin mobile emprunte la ou chaque trajectoire opérationnelle définie, il sera en mesure d'effectuer la tâche associée.

Par exemple, pour une tâche de prise de vue d'un site ou d'un objectif précis, par un drone équipé d'une ou plusieurs caméras, la trajectoire opérationnelle doit permettre de survoler l'objectif, à distance et à angle permettant de satisfaire une prise de vue selon une qualité prévue (e.g. une résolution suffisante).

Le module 26 est un module de calcul de transitions entre trajectoires opérationnelles successives, et de calcul d'un deuxième coût pour chaque transition.

Le module 28 est un module de détermination d'un ou de plusieurs plans de trajectoires qui satisfont le critère de haut niveau initialement fourni.

Chaque plan de trajectoires est formé par sélection d'une trajectoire opérationnelle par tâche à effectuer, parmi les trajectoires d'un ensemble (cluster), et par sélection d'une transition entre chaque couple de trajectoires opérationnelles successives.

La concaténation des trajectoires d'un plan de trajectoires forme également une trajectoire, dite trajectoire de mission, permettant de réaliser l'ensemble de tâches de la mission (ou tâches à effectuer).

Le module 28 est configuré pour calculer un coût global associé à chaque plan de trajectoires, en fonction des premiers et deuxièmes coûts associés respectivement aux trajectoires opérationnelles et transitions du plan de trajectoires, permettant de mesurer la performance du plan de trajectoires pour effectuer la mission par rapport aux critères de haut niveau fournis par l'opérateur.

Des exemples de mise en oeuvre des modules 22, 24, 26, 28 seront décrits ci-après.

Dans un mode de réalisation, les modules 22, 24, 26, 28 sont réalisés sous forme d'instructions logicielles formant un programme d'ordinateur, qui, lorsqu'il est exécuté par le processeur 12 met en oeuvre un procédé de génération de plans de trajectoires selon l'invention.

En variante non représentée, les modules 22, 24, 26, 28 sont réalisés chacun sous forme d'un composant logique programmable, tel qu'un FPGA (de l'anglais *Field Programmable Gate Array*), un GPU (processeur graphique) ou un GPGPU (de l'anglais *General-purpose processing on graphies processing*), ou encore sous forme d'un circuit intégré dédié, tel qu'un ASIC (de l'anglais *Application Spécifie Integrated Circuit*).

Le programme d'ordinateur comportant des instructions logicielles est en outre apte à être enregistré sur un support, non représenté, lisible par ordinateur. Le support lisible par ordinateur est par exemple, un médium apte à mémoriser les instructions électroniques et à être couplé à un bus d'un système informatique. A titre d'exemple, le support lisible est un disque optique, un disque magnéto-optique, une mémoire ROM, une mémoire RAM, tout type de mémoire non-volatile (par exemple EPROM, EEPROM, FLASH, NVRAM), une carte magnétique ou une carte optique.

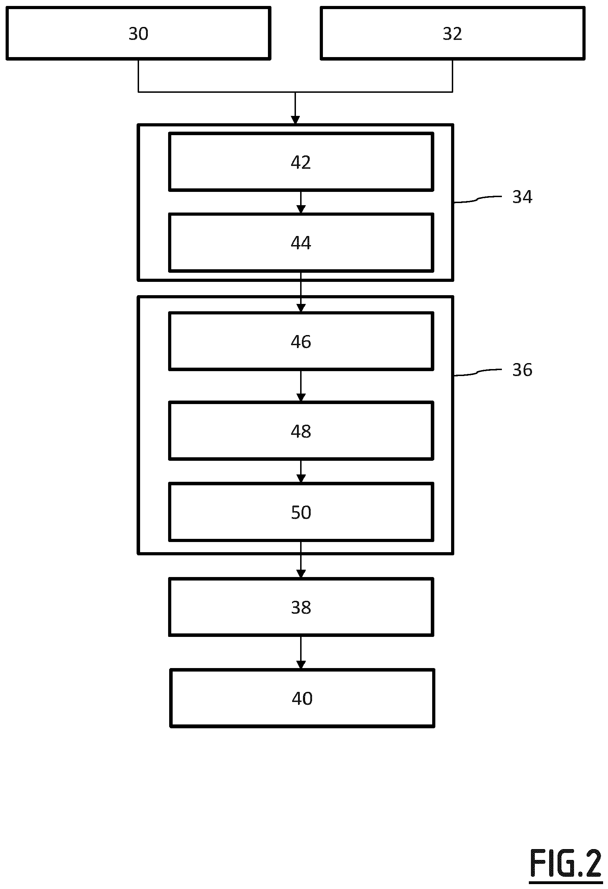

La figure 2 est synoptique des principales étapes d'un procédé de génération d'un plan de trajectoires, selon un mode de réalisation.

Le procédé comporte des étapes d'initialisation 30 et 32.

Le procédé comporte l'étape 30 d'obtention d'au moins un critère de haut niveau à satisfaire par ladite mission, ce critère de haut niveau étant représentatif des intentions de l'opérateur.

Par exemple, plusieurs critères de haut niveau sont fournis.

Dans un mode de réalisation, les critères de haut niveau sont fournis via l'interface homme machine 6, et sont transformés en scores, ces scores étant les composantes un vecteur de performances à satisfaire, dans l'espace métrique de haut niveau à K dimensions.

Le vecteur de performances à satisfaire s'exprime par :
V_intent=$[V_1,...,V_K]$, les valeurs $V_1$ à $V_K$ étant des scores à obtenir sur chaque dimension.

Par exemple, K=3, les trois dimensions représentent respectivement la rapidité, l'efficacité, la sécurité.

Les valeurs de scores sont par exemple normalisées entre un score minimal et un score maximal, par exemple entre 0 et 100, et plus particulièrement entre 0 et 10.

En variante, les valeurs de scores sont par exemple des valeurs effectives à satisfaire selon la métrique correspondante.

De préférence, la traduction des intentions de haut niveau de l'opérateur en vecteur de performances à satisfaire est effectuée automatiquement, par le procédé décrit dans la demande de brevet FR 2005823.

De plus, le procédé comporte une étape 32 d'obtention d'informations permettant de définir la mission, et des informations relatives à des conditions effectives de mission (e.g. données topologiques, données météorologiques, données issues de capteurs).

Les informations peuvent être obtenues via l'interface homme-machine, et/ou des serveurs/bases de données externes, et/ou à partir de données préalablement mémorisées, par exemple sous forme de fichier.

En particulier, l'ensemble de tâches à effecteur est obtenu à l'étape 32, ainsi que des informations relatives à des paramètres fonctionnels des tâches (e.g. qualité minimale, durée maximale).

Par exemple, pour une tâche de capture d'images, utilisant un type de capteur embarqué donné, par exemple une caméra optique, des coordonnées spatiales d'un site ou d'un objectif sont fournies, ainsi qu'une distance de l'objectif ou niveau de qualité de résolution attendu.

Dans un autre exemple, une tâche de capture d'images peut être réalisée par plusieurs capteurs de l'engin mobile. Par exemple, pour une prise de vue, si l'engin mobile embarque un capteur SAR (« synthetic aperture radar ») et un capteur optronique, et que la tâche peut être réalisée avec une qualité satisfaisante par l'un ou l'autre des capteurs, des trajectoires comportant l'utilisation de chacun des capteurs seront considérées dans les étapes suivantes du procédé. Ainsi, avantageusement, au final le plan de trajectoires obtenu comportera la réalisation de la tâche de capture d'images par le capteur automatiquement choisi selon les critères d'optimisation implémentés. En d'autres termes, le capteur optimal pour effectuer la tâche de captures d'images et la trajectoire seront choisis en même temps.

Le procédé comporte ensuite une étape 34 de génération d'un ensemble de trajectoire(s) opérationnelle(s) par tâche, et d'un premier coût associé à chaque trajectoire opérationnelle.

L'étape 34 de génération est suivie d'une étape 36 de calcul de transitions et d'évaluation de performance par calcul de deuxièmes coûts associés aux transitions.

Le procédé comporte ensuite une détermination 38 d'un ou plusieurs plans de trajectoires pour réaliser la mission, en fonction d'un coût global fonction des premiers et deuxièmes coûts calculés, et une étape optionnelle 40 de post-traitement.

Dans le cas particulier où l'étape de détermination 38 consiste à déterminer un seul plan de trajectoires, qui satisfait au mieux les intentions de l'opérateur, l'étape optionnelle 40 de post-traitement n'est pas réalisée.

Dans le cas où l'étape de détermination 38 consiste à générer un nombre N de plans de trajectoires, l'étape 40 de post-traitement effectue un filtrage de trajectoires permettant de retenir un nombre M<N de trajectoires, qui sont dites alternatives, i.e. présentent des alternatives compréhensibles pour un opérateur.

En effet, lorsque la détermination 38 est basée sur un coût calculatoire, on constate qu'un procédé de calcul sélectionne un très grand nombre de plans de trajectoires très proches, par exemple en termes de distance ou de ressemblance selon une métrique de proximité prédéfinie (e.g. par exemple des trajectoires spatialement proches pour un aéronef). Des trajectoires très proches ne constituent pas des alternatives effectives pour un opérateur.

Il est donc avantageux de présenter des alternatives effectives, par exemple comprenant des trajectoires opérationnelles distantes spatialement, en nombre réduit, pour permettre à un opérateur de sélectionner rapidement et facilement un plan de trajectoires pour réaliser la mission donnée.

De préférence, le nombre M d'alternatives retenues est égal à 3. En situation opérationnelle, pour une planification en temps réel, le nombre M d'alternatives est de préférence limité, par exemple compris entre 2 et 5. Le nombre d'alternatives peut également être supérieur à 5, notamment dans le cas de la planification amont d'une mission.

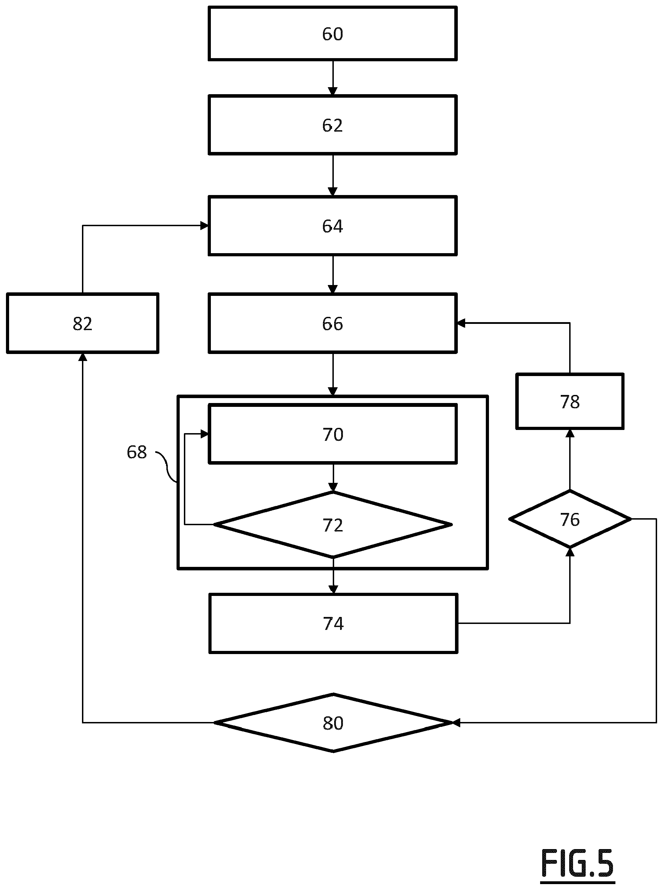

Dans un mode de réalisation, l'étape 34 de génération d'un ensemble de trajectoires opérationnelles met en oeuvre un filtrage de trajectoires décrit ci-après en référence à la figure 5.

Dans un mode de réalisation, l'étape 34 de génération d'un ensemble de trajectoire(s) opérationnelle(s) par tâche, comprend une étape 42 de génération, pour chaque tâche Tâche_i de la mission, d'un ensemble Cluster_i de $P_i$ trajectoires opérationnelles.

L'indice i est représentatif de l'ordre des tâches à effectuer.

De plus, formellement, pour la planification d'une mission, une tâche dite d'entrée, et une tâche de sortie sont formellement définies, la tâche d'entrée étant associée au point de départ de l'engin mobile et la tâche de sortie au point d'arrivée de l'engin mobile.

Pour les tâches d'entrée et de sortie, la trajectoire associée est par exemple réduite à un seul point.

Par exemple, pour chaque tâche à effectuer Tâche_i, un même nombre de trajectoires opérationnelles $P_i=P$ est généré.

Pour chaque ensemble Cluster_i, les trajectoires opérationnelles générées sont mémorisées.

Optionnellement, l'étape 42 met en oeuvre un filtrage de trajectoires, dont un mode de réalisation est décrit ci-après, pour obtenir, dans chaque ensemble Cluster_i, Pi trajectoires qui présentent une variété considérée suffisante sur la base d'une métrique de proximité (ou de ressemblance) qui est définie.

L'étape 42 est suivie d'une étape 44 de calcul de premier coût, représentatif de la performance par rapport aux scores à satisfaire dans l'espace métrique HLOM, pour chaque ensemble Cluster_i et pour chaque trajectoire de cet ensemble.

Dans un mode de réalisation, l'étape 44 comporte, pour chaque trajectoire, le calcul d'un premier vecteur de performance dans l'espace métrique des performances à satisfaire (espace HLOM).

Chaque composante du premier vecteur de performance est une valeur de performance, par exemple un score, de la trajectoire opérationnelle considérée selon une des dimensions de l'espace métrique de haut niveau, par exemple une évaluation de rapidité, efficacité, sécurité dans l'exemple décrit ci-dessus.

Le calcul des valeurs de performance est effectué à partir de métriques dites bas niveau, ou métriques LLOM (pour « Low Level Operational Metrics »), qui sont des valeurs quantifiées à partir de caractéristiques opérationnelles de fonctionnement (e.g. vitesse de déplacement de l'engin mobile, altitude, état des capteurs à utiliser, angle d'incidence, stabilité, quantité de carburant consommée etc).

Les valeurs de performance dans l'espace métrique de bas niveau LLOM sont fournies à un premier outil de mise en correspondance préalablement entraîné sur des données d'apprentissage pour inférer les valeurs correspondantes dans l'espace métrique HLOM.

Par exemple, le procédé décrit dans la demande de brevet FR 20 05823 est mis en oeuvre. Le premier outil de mise en correspondance met en oeuvre par exemple un réseau de neurones ou un arbre de décision à logique floue GFT (pour « Genetic Fuzzy Trees »).

Ainsi, pour une trajectoire opérationnelle d'indice j de l'ensemble Cluster i, notée $T_j^i$, le premier vecteur de

$$V\_perf_j^i = [V_{perf}{}_j^i(1), \ldots, V_{perf}{}_j^i(K)]$$

performance est noté :

L'étape 44 comprend en outre un calcul, pour chaque trajectoire, d'un premier coût, représentatif des écarts entre le premier vecteur de performance et le vecteur de performances à satisfaire.

Le premier coût est calculé par une fonction d'évaluation d'écart, combinant $V\_perf_j^i$ et *V_intent*, par exemple réalisant une combinaison des écarts composante par composante, entre le premier vecteur de performance calculé et le vecteur de performance à satisfaire.

Par exemple, le premier coût est calculé par la formule :

[MATH 1]

$$C_{ij} = \sum_{l=1}^{K} \left| V_{perf}{}_j^i(l) - V_{intent}(l) \right|$$

$V_{intent}(l) = V_l$, pour chaque score $V_l$ obtenu à l'étape 30 d'obtention d'au moins un critère de haut niveau à satisfaire.

En variante, selon un autre exemple, la fonction d'évaluation d'écart est la suivante :

[MATH 2]

$$C_{ij} = \sum_{l=1}^{K} \exp(V_{perf}{}_{j}^{i}(l) - V_{intent}(l))$$

Bien entendu, les fonctions d'évaluation d'écart ci-dessus pour calculer les écarts entre le premier vecteur de performance et le vecteur de performances à satisfaire ont été données ici à titre d'exemple, d'autres fonctions d'évaluations d'écart étant utilisables.

L'étape 36 de calcul de transitions et de calcul d'un deuxième coût associé comporte une étape 46 de calcul de plusieurs transitions entre un point de sortie d'une trajectoire opérationnelle $T_a^j$ d'un ensemble Cluster_j et un point d'entrée d'une trajectoire opérationnelle $T_b^{j+1}$ d'un ensemble suivant Cluster_j+1. Une transition est une trajectoire de l'engin mobile, mais qui n'est pas associée à une contrainte opérationnelle pour réaliser une tâche donnée.

Par exemple, le calcul d'un coût d'une transition est effectué par le procédé décrit dans la demande de brevet FR 2005823.

Optionnellement, l'étape 46 met en oeuvre également un filtrage de trajectoires, dont un mode de réalisation est décrit ci-après, pour obtenir des transitions qui présentent une variété considérée suffisante sur la base d'une métrique de proximité (ou de ressemblance).

On obtient à l'issue de l'étape 46 un ensemble de transitions $\{Trans_q^{a \to b}\}$, les indices j et j+1 étant omis ici pour simplifier les notations.

L'étape 46 est suivie d'une étape 48 de calcul de deuxième coût, pour chaque transition de l'ensemble de transitions.

Dans un mode de réalisation, l'étape 48 est analogue à l'étape 44 décrite ci-dessus, et permet d'obtenir, pour chaque transition, un deuxième coût associé.

De manière analogue, un deuxième vecteur de performance, dans l'espace métrique HLOM, est calculé pour chaque transition, à partir d'un vecteur de performance dans un espace métrique LLOM.

Par exemple, un deuxième outil de mise en correspondance entre l'espace métrique de bas niveau LLOM (pour « low level operational metrics ») et l'espace métrique HLOM est mis en oeuvre.

Le deuxième outil de mise en correspondance met en oeuvre par exemple un réseau de neurones ou un arbre de décision à logique floue GFT (pour « Genetic Fuzzy Trees »).

Selon un mode de réalisation, le deuxième outil de mise en correspondance utilisé pour les transitions est différent du premier outil de mise en correspondance utilisé pour les trajectoires opérationnelles.

L'étape 48 comprend, dans un mode de réalisation, le calcul du deuxième coût, représentatif des écarts entre le deuxième vecteur de performance et le vecteur de performances à satisfaire, comme décrit en référence à l'étape 44.

De manière analogue, une fonction d'évaluation d'écarts, par exemple composante par composante, selon les formules [MATH 1] ou [MATH 2], est mise en oeuvre.

L'étape 48 est suivie d'une étape 50 de calcul d'un coût synthétique, pour l'ensemble des transitions $\{Trans_q^{a \to b}\}$.

Par exemple, le coût synthétique est égal au minimum, ou la moyenne, ou la médiane des deuxièmes coûts calculés à l'étape 48.

On obtient alors un coût synthétique $C_s(a,b)$, qui est alors associé à chaque transition de l'ensemble de transitions $\{Trans_q^{a \to b}\}$.

L'étape 38 de détermination de plans de trajectoires utilise les premier et deuxièmes coûts calculés précédemment.

Dans un mode de réalisation, un nombre N de plans de trajectoires alternatifs est choisi.

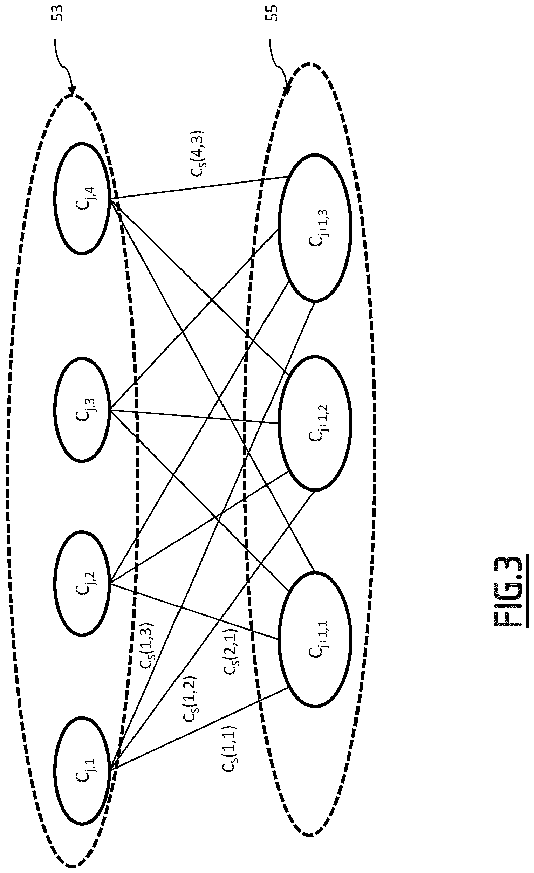

Selon un mode de réalisation, un graphe est construit à partir des ensembles de trajectoires successifs, et des transitions préalablement générées. Un exemple d'un tel graphe sur deux niveaux successifs, d'indices respectifs j et j+1, est illustré schématiquement à la figure 3.

Les noeuds du graphe sont les trajectoires opérationnelles des ensembles Cluster_j, Cluster_j+1 etc., le premier coût calculé pour la trajectoire opérationnelle étant associé à chaque noeud.

Sur la figure 3, on a illustré l'ensemble de noeuds correspondant à un ensemble de 4 trajectoires opérationnelles Cluster_j 53, et l'ensemble de noeuds correspondant à un ensemble de 3 trajectoires opérationnelles Cluster_j+1 55.

Les noeuds des niveaux successifs sont reliés par des arcs, représentatifs des transitions, le deuxième coût, égal au coût synthétique, étant associée à chaque transition.

Un algorithme de détermination de chemins dans le graphe ainsi construit est mis en oeuvre, en fonction des valeurs associées aux noeuds et aux arcs.

Par exemple, l'algorithme décrit dans l'article « Finding the k Shortest Paths » de D. Eppstein, publié le 31 mars 1997 est mis en oeuvre.

Selon une variante, l'ensemble des combinaisons est évalué en additionnant les coûts des noeuds et arcs formant chaque combinaison pour former un coût global, et en retenant les N combinaisons de coûts globaux les plus faibles. Chaque combinaison forme un plan de trajectoires.

En variante, le coût global est calculé par une somme pondérée des premiers et deuxièmes coûts respectifs.

Les trajectoires successives d'un plan de trajectoires forment une trajectoire de mission.

L'étape optionnelle 40 de post-traitement effectue un filtrage de trajectoires de mission permettant de retenir un nombre M<N de trajectoires, qui sont dites alternatives, i.e. présentent des alternatives compréhensibles pour un opérateur.

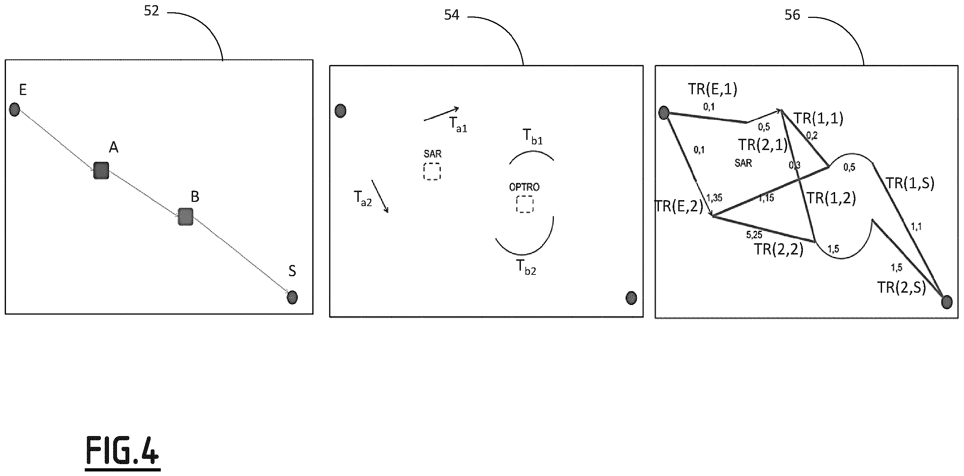

La figure 4 illustre schématiquement un exemple de mission comportant deux tâches à effectuer, respectivement une première prise de vue (A) par imagerie SAR (de l'anglais « Synthetic Aperture Radar »), et une deuxième prise de vue (B) par imagerie optronique. Des tâches formelles d'entrée ($T_E$) et de sortie ($T_S$) sont ajoutées.

Les tâches composant la mission sont illustrées schématiquement sur le graphe 52.

Le graphe 54 de la figure 4 illustre schématiquement les trajectoires opérationnelles générées pour chaque tâche, au nombre de deux dans cet exemple, respectivement Ta1 et Ta2 pour l'imagerie SAR et Tb1, Tb2 pour l'imagerie optronique.

Les ensembles de trajectoires (ou « cluster ») Cluster_a={Ta1, Ta2} et Cluster_b={Tb1,Tb2} sont ainsi formés.

Le graphe 56 illustre les transitions respectives et les coûts associés.

Dans le détail, la transition entre l'entrée et la trajectoire opérationnelle Ta1 est notée TR(E,1), et la transition entre l'entrée et la trajectoire opérationnelle Ta2 est notée TR(E,2).

La transition entre la trajectoire opérationnelle Ta1 et la trajectoire opérationnelle Tb1 est notée TR(1,1), la transition entre la trajectoire opérationnelle Ta1 et la trajectoire opérationnelle Tb2 est notée TR(1,2), la transition entre la trajectoire opérationnelle Ta2 et la trajectoire opérationnelle Tb1 est notée TR(2,1), la transition entre la trajectoire opérationnelle Ta2 et la trajectoire opérationnelle Tb2 est notée TR(2,2).

La transition entre la trajectoire opérationnelle Tb1 et la sortie est notée TR(1,S) et la trajectoire opérationnelle Tb2 et la sortie est notée TR(2,S).

Sur cet exemple simplifié, les plans de trajectoires suivants sont envisagés :

$$Plan1=\{TR(E,1),Ta1,TR(1,1),Tb1,T(1,S)\}$$

$$Plan2=\{TR(E,1),Ta1,TR(1,2),Tb2,T(2,S)\}$$

$$Plan3=\{TR(E,2),Ta2,TR(2,1),Tb1,T(1,S)\}$$

$$Plan4=\{TR(E,2),Ta2,TR(2,2),Tb2,T(2,S)\}$$

Au vu des coûts des trajectoires opérationnelles et transitions, le coût global de chaque plan de trajectoires peut être calculé par addition comme suit :

$$C(Plan1)=0,1+0,5+0,2+0,5+1,1=2,4$$

$$C(Plan2)=0,1+0,5+0,3+1,5+1,5=3,9$$

$$C(Plan3)=0,1+1,35+1,15+0,5+1,1=4,2$$

$$C(Plan4)=0,1+1,35+5,25+1,5+1,5=9,7$$

Selon un algorithme de sélection des « plus courts chemins », en termes des indicateurs (e.g. coûts) associés, le choix de deux plans parmi les quatre calculés aboutirait au choix des plans Plan1 et Plan2.

Néanmoins, en rajoutant un critère supplémentaire basé sur une métrique de proximité des trajectoires, dans l'éventualité où Plan1 et Plan2 sont trop proches géographiquement, les plans Plan1 et Plan3 peuvent être choisis.

La figure 5 est un synoptique d'un filtrage de trajectoires selon un mode de réalisation.

Le filtrage de trajectoires comprend une étape 60 de réception d'un ensemble de trajectoires comportant un nombre N de trajectoires, et un classement des trajectoires, selon un ordre choisi, sur la base d'un critère de classement, dans une liste J.

Par exemple, les trajectoires sont classées dans l'ordre croissant des indicateurs de performance par rapport aux intentions, les indicateurs de performance étant calculés selon la méthode décrite en référence à la figure 2.

Un seuil à appliquer, noté R, est obtenu à l'étape 62.

Par exemple, dans un mode de réalisation, le seuil R est calculé en fonction d'une métrique de proximité choisie.

Dans un mode de réalisation, la métrique de proximité est une distance spatiale entre des points des trajectoires.

Considérant deux trajectoires distinctes T1 et T2, la trajectoire T1 comportant N1 points et la trajectoire T2 comportant N2 points, la longueur respective P1 et P2 de chacune de ces trajectoires est calculée. La longueur est calculée comme étant la somme des distances entre points successifs de chacune des trajectoires.

La longueur de chaque trajectoire peut être exprimée de manière équivalente en durée temporelle de chaque trajectoire.

Ensuite, les trajectoires T1 et T2 sont ré-échantillonnées, de manière à ce que chacune comporte un même nombre P de points, par exemple régulièrement espacés temporellement.

Ainsi la trajectoire T1 est ré-échantillonnée en une succession de P points :

$$\{S_{1i}, i=1\text{->}P\}$$

De manière analogue, la trajectoire T2 est ré-échantillonnée en une succession de P points : $\{S_{2i}, i=1\text{->}P\}$

Le ré-échantillonnage met en oeuvre par exemple une interpolation entre positions successives de chaque trajectoire.

La distance spatiale entre les trajectoires T1 et T2 est alors calculée par :

$$D_{12} = \frac{\sum_{q=1}^{P} d(S_{1q}, S_{2q})}{\max(P_1, P_2)}$$

Où $d(S_{1q},S_{2q})$ est une distance euclidienne entre les points $S_{1q}$ et $S_{2q}$ dans un référentiel spatial, ou une autre distance, par exemple la distance L1.

Dans un autre mode de réalisation la métrique de proximité est une distance dans l'espace métrique HLOM. Dans ce mode de réalisation, chaque trajectoire a un vecteur de performance dans l'espace HLOM associé, et la distance est une distance entre ces vecteurs de performance dans l'espace HLOM, par exemple la distance euclidienne.

De retour à l'étape 62, le seuil R est une fraction F de la moyenne des distances entre Q trajectoires de la liste J, Q étant un entier inférieur à N, la fraction F étant par exemple comprise entre 1/10 et 1.

Le filtrage de trajectoires comprend ensuite une étape 64 d'initialisation d'une liste L de trajectoires retenues. Lors de cette étape d'initialisation, la liste L est initialisée avec la première trajectoire de la liste ordonnée J, noté J[1]. Un indice i est initialisé à 2.

Lors d'une étape suivante 66, la trajectoire suivante de la liste J est choisie comme trajectoire courante, notée TA.

Il est ensuite vérifié à l'étape 68 si la trajectoire courante est à distance inférieure, selon la métrique de proximité choisie, au seuil R d'une des trajectoires déjà mémorisées dans la liste L de trajectoires retenues.

L'étape 68 met en oeuvre une boucle sur toutes les trajectoires TB de la liste L, dans laquelle la distance $D_{AB}$, selon la métrique de proximité choisi, est calculée (étape 70) et comparée au seuil R (étape 72).

Dès que la distance est inférieure au seuil, l'étape 68 est suivie de l'étape 76 décrite ci-après.

Si la distance $D_{AB}$ est supérieure au seuil R pour chaque trajectoire de la liste L, alors la trajectoire courante TA est ajoutée à la liste L de trajectoires retenues (étape 74).

L'étape 74 est suivie de l'étape 76 à laquelle l'indice i courant est comparé à N (cardinal de la liste J), et incrémenté de 1 s'il est inférieur à N (étape 78).

L'étape 78 est suivie de l'étape 66 préalablement décrite et des étapes suivantes.

En cas de résultat négatif à l'étape 76, i.e. en d'autres termes si toutes les trajectoires de la liste ordonnée J ont été parcourues, il est vérifié à l'étape 80 si le cardinal de la liste L de trajectoires retenues est supérieur ou égal à M, M étant le nombre de trajectoires attendu après filtrage.

En cas de réponse négative, l'étape 80 est suivie d'une étape 82 d'ajustement du seuil R. Par exemple, R est augmenté de 10%. Bien entendu, ce pourcentage est donné à titre d'exemple seulement, d'autres pourcentages d'augmentation pouvant être envisagés.

En cas de réponse positive, en d'autres termes si le nombre de trajectoires dans la liste L est supérieur ou égal à M, le procédé de filtrage de trajectoires prend fin.

Il est entendu que le mode de réalisation de la figure 5 a été donné à titre d'exemple, d'autres variantes de mise en oeuvre étant à la portée de l'homme du métier.

Avantageusement, le filtrage de trajectoires selon une métrique de proximité permet d'obtenir un ensemble de trajectoires dont la distance, selon la métrique de proximité, est supérieure à un seuil choisi, ce qui assure une variété de trajectoires, qui peuvent être effectivement considérées comme des alternatives pour un opérateur.

Avantageusement, le procédé proposé permet à la fois d'obtenir des plans de trajectoires proches de critères de haut niveaux à satisfaire, définis par un opérateur, et qui sont des alternatives distinctes. L'opérateur a alors accès à un choix qui est compréhensible et satisfaisant.

## Revendications

1. Procédé de génération d'au moins un plan de trajectoires d'un engin mobile pour réaliser une mission, la mission comportant une pluralité de tâches à effectuer dans un ordre donné, le ou chaque plan de trajectoires étant composé d'une succession de trajectoires opérationnelles séparées par des transitions, chaque trajectoire opérationnelle étant associée à une tâche à effectuer et ayant un point d'entrée et un point de sortie, chaque transition étant une trajectoire entre un point de sortie d'une trajectoire opérationnelle et un point d'entrée d'une trajectoire opérationnelle suivante,

   **caractérisé en ce qu'**il comporte des étapes, mise en oeuvre par un processeur de calcul, de :

   - A) obtention (30) d'au moins un critère de haut niveau à satisfaire par ladite mission, ,
   - B) génération (34, 42), pour chaque tâche à effectuer d'un ensemble de trajectoires opérationnelles, et calcul (44), pour chaque trajectoire opérationnelle dudit ensemble, d'un premier coût relatif au critère de haut niveau à satisfaire associé,
   - C) calcul (36, 46, 50) d'au moins une transition entre deux trajectoires opérationnelles successives et calcul (48) d'un deuxième coût, relatif au critère de haut niveau à satisfaire, associé à ladite au moins une transition,
   - D) détermination (38, 40) d'au moins un plan de trajectoires, le ou chaque plan de trajectoires comportant une trajectoire opérationnelle sélectionnée dans chaque ensemble de trajectoires opérationnelles généré, et une transition entre deux trajectoires opérationnelles successives,

   la détermination d'un plan de trajectoires étant effectuée en fonction d'un coût global fonction desdits premiers et deuxièmes coûts des trajectoires opérationnelles et transitions dudit plan de trajectoires.

2. Procédé selon la revendication 1, comportant en outre une définition (32), à partir dudit au moins un critère de haut niveau à satisfaire, de K scores dans un espace métrique à K dimensions, K étant un nombre entier supérieur ou égal à 1, dit espace métrique de haut niveau, les K scores formant un vecteur de performance à satisfaire, le calcul (44) du premier coût comportant, pour chaque trajectoire opérationnelle, un calcul d'un premier vecteur de performance dans ledit espace métrique de haut niveau, ledit premier coût étant calculé par une fonction d'évaluation d'écart, combinant ledit premier vecteur de performance et le vecteur de performance à satisfaire, et le calcul (48) du deuxième coût comporte, pour chaque transition, un calcul d'un deuxième vecteur de performance dans ledit espace métrique de haut niveau, ledit deuxième coût étant calculé par la fonction d'évaluation d'écart, combinant ledit deuxième vecteur de performance et le vecteur de performance à satisfaire.

**3.** Procédé selon la revendication 2, dans lequel ladite fonction d'évaluation d'écart effectue une combinaison des écarts, composante par composante, entre ledit premier ou deuxième vecteur de performance et le vecteur de performance à satisfaire.

**4.** Procédé selon la revendication 2 ou 3, dans lequel le calcul (44) d'un premier vecteur de performance associé à une trajectoire opérationnelle comporte un calcul de valeurs de performance associées à ladite trajectoire opérationnelle dans un espace métrique de bas niveau, et une application d'un premier outil de mise en correspondance entre l'espace métrique de bas niveau et l'espace métrique de haut niveau, le premier outil de mise en correspondance ayant été préalablement entraîné sur des données d'apprentissage.

**5.** Procédé selon l'une des revendications 2 à 4, lequel le calcul (48) d'un deuxième vecteur de performance associé à la transition comporte un calcul de valeurs de performance associées à ladite transition dans l'espace métrique de bas niveau, et une application d'un deuxième outil de mise en correspondance entre espace métrique de bas niveau et espace métrique de haut niveau, le deuxième outil de mise en correspondance ayant été préalablement entraîné sur des données d'apprentissage.

**6.** Procédé selon la revendication 5, dans lequel ledit premier outil de mise en correspondance met en oeuvre un réseau de neurones ou un arbre de décision à logique floue, et ledit deuxième outil de mise en correspondance met en oeuvre un réseau de neurones ou un arbre de décision à logique floue.

**7.** Procédé selon l'une des revendications 1 à 6, dans lequel l'étape C) comporte un calcul (46) d'une pluralité de transitions entre deux trajectoires opérationnelles successives, et le calcul d'un coût synthétique, en fonction des deuxièmes coûts associés à chacune des transitions de la pluralité de transitions, ledit coût synthétique étant attribué à chacune des transitions de ladite pluralité de transitions.

**8.** Procédé selon l'une quelconque des revendications 1 à 7, dans lequel l'étape D) comporte la détermination d'une pluralité de N plans de trajectoires, N étant strictement supérieur à 1, le procédé comportant en outre une étape de post-traitement (40) mettant en oeuvre un filtrage de trajectoires, chaque plan de trajectoires étant transformé en une trajectoire de mission, le filtrage étant mis en oeuvre sur les trajectoires de mission pour obtenir un nombre M inférieur à N de trajectoires, telles qu'une distance entre toute paire de trajectoires de mission est supérieure à un seuil, ladite distance étant calculée selon une métrique de proximité prédéfinie.

**9.** Programme d'ordinateur comportant des instructions logicielles qui, lorsqu'elles sont mises en oeuvre par un dispositif électronique programmable, mettent en oeuvre un procédé de génération d'au moins un plan de trajectoires d'un engin mobile pour réaliser une mission conforme aux revendications 1 à 8.

**10.** Dispositif de génération d'au moins un plan de trajectoires d'un engin mobile pour réaliser une mission, la mission comportant une pluralité de tâches à effectuer dans un ordre donné, le ou chaque plan de trajectoires étant composé d'une succession de trajectoires opérationnelles séparées par des transitions, chaque trajectoire opérationnelle étant associée à une tâche à effectuer et ayant un point d'entrée et un point de sortie, chaque transition étant une trajectoire entre un point de sortie d'une trajectoire opérationnelle et un point d'entrée d'une trajectoire opérationnelle suivante,
**caractérisé en ce qu'**il comporte un processeur de calcul configuré pour exécuter :

- un module (22) obtention d'au moins un critère de haut niveau à satisfaire par ladite mission,
- un module (24) de génération, pour chaque tâche à effectuer, d'un ensemble de trajectoires opérationnelles, et de calcul, pour chaque trajectoire opérationnelle dudit ensemble, d'un premier coût associé,
- un module (26) de calcul d'au moins une transition entre deux trajectoires opérationnelles successives et de calcul d'un deuxième coût associé à ladite au moins une transition,
- un module (28) de détermination d'au moins un plan de trajectoires, le ou chaque plan de trajectoires comportant une trajectoire opérationnelle sélectionnée dans chaque ensemble de trajectoires opérationnelles généré, et une transition entre deux trajectoires opérationnelles successives,

la détermination d'un plan de trajectoires étant effectuée en fonction d'un coût global fonction desdits premiers et deuxièmes coûts des trajectoires opérationnelles et transitions dudit plan de trajectoires.

EP 4 339 853 A1

FIG.1

```
┌──────────────────────────┐   ┌──────────────────────────┐
│            30            │   │            32            │
└──────────────────────────┘   └──────────────────────────┘
              │                              │
              └───────────────┬──────────────┘
                              │
                              ▼
      ┌──────────────────────────────────────┐
      │  ┌────────────────────────────────┐  │
      │  │               42               │  │
      │  └────────────────────────────────┘  │        34
      │                  │                   │
      │                  ▼                   │
      │  ┌────────────────────────────────┐  │
      │  │               44               │  │
      │  └────────────────────────────────┘  │
      └──────────────────────────────────────┘
                         │
                         ▼
      ┌──────────────────────────────────────┐
      │  ┌────────────────────────────────┐  │
      │  │               46               │  │
      │  └────────────────────────────────┘  │
      │                  │                   │
      │                  ▼                   │        36
      │  ┌────────────────────────────────┐  │
      │  │               48               │  │
      │  └────────────────────────────────┘  │
      │                  │                   │
      │                  ▼                   │
      │  ┌────────────────────────────────┐  │
      │  │               50               │  │
      │  └────────────────────────────────┘  │
      └──────────────────────────────────────┘
                         │
                         ▼
      ┌──────────────────────────────────────┐
      │                  38                  │
      └──────────────────────────────────────┘
                         │
                         ▼
      ┌──────────────────────────────────────┐
      │                  40                  │
      └──────────────────────────────────────┘
```

FIG.2

**FIG.3**

FIG.4

FIG.5

Europäisches
Patentamt

European
Patent Office

Office européen
des brevets

**RAPPORT DE RECHERCHE EUROPEENNE**

Numéro de la demande

**EP 23 19 7999**

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | USMAN A FIAZ ET AL: "A Hybrid Compositional Approach to Optimal Mission Planning for Multi-rotor UAVs using Metric Temporal Logic", ARXIV.ORG, CORNELL UNIVERSITY LIBRARY, 201 OLIN LIBRARY CORNELL UNIVERSITY ITHACA, NY 14853, 8 avril 2019 (2019-04-08), XP081492550, * abrégé * * chapitres II à VII * ----- | 1-10 | INV. G06Q10/047 G05D1/00 G08G5/00 |

DOMAINES TECHNIQUES
RECHERCHES (IPC)

G06Q
G08G
G05D

Le présent rapport a été établi pour toutes les revendications

| Lieu de la recherche | Date d'achèvement de la recherche | Examinateur |
|---|---|---|
| Munich | 16 octobre 2023 | Chauvet, Christophe |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
...............................................................................................
& : membre de la même famille, document correspondant

EPO FORM 1503 03.82 (P04C02)

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2005823

**Littérature non-brevet citée dans la description**

- **D. EPPSTEIN.** *Finding the k Shortest Paths,* 31 Mars 1997